Europäisches Patentamt

European Patent Office

Office européen des brevets

(11) Publication number: **0 301 624 B1**

# EUROPEAN PATENT SPECIFICATION

(45) Date of publication of patent specification: **30.09.92**  (51) Int. Cl.⁵: **B32B 27/12**

(21) Application number: **88201423.6**

(22) Date of filing: **07.07.88**

(54) **Multi-ply films of high impact strength and tear strength, process for their production and their use.**

(30) Priority: **23.07.87 DE 3724433**

(43) Date of publication of application:
**01.02.89 Bulletin 89/05**

(45) Publication of the grant of the patent:
**30.09.92 Bulletin 92/40**

(84) Designated Contracting States:
**AT BE CH DE ES FR GB IT LI NL SE**

(56) References cited:
**FR-A- 2 140 156**
**GB-A- 2 056 913**
**US-A- 4 606 970**

(73) Proprietor: **DSM N.V.**
**Het Overloon 1**
**NL-6411 TE Heerlen(NL)**

(72) Inventor: **Pluyter, Pieter Boudewijn**
**Dagobertstraat 100**
**NL-6132 ER Sittard(NL)**
Inventor: **Heffels, Frans**
**Tiendstraat 12**
**NL-6121 KG Born(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The invention relates to multi-ply films of high impact strength and tear strength, consisting of at least three layers of polyolefin homopolymers and/or copolymers.

Numerous multi-ply films serving the most diverse applications and consisting of layers of polyolefin homopolymers and copolymers or of combinations of such layers with layers of other polymers are known. FR-A-2140156 describes a polyethylene sheet reinforced with a pulp-like mass of short polyolefin fibrils. Although the polyolefin of the fibrils is of a high molecular weight the fibrils are not very strong. The fibrils are very short which is also a disadvantage for obtaining a sheet having high impact strength and tear strength. Furthermore the polyethylene used in the sheet is of a relatively low molecular weight and will for this reason not give a special contribution to the impact strength and tear strength of the sheet.

US-A-4606970 describes a laminate comprising a polyolefin non-woven fabric and a polyolefin film. As no high molecular weight polyolefins are used the laminate film will not have a very high impact strength and tear strength.

GB-A-2056913 describes a low density polyolefin foam reinforced with polyolefin fibers. No multi-ply films of high impact strength and tear strength are mentioned.

The known multi-ply films, however, possess good impact strengths and tear strengths only if they are produced in relatively large film thicknesses of several hundred $\mu$m. With such thicknesses, however, they are unsuitable for certain applications such as, for example, for the manufacture of parachutes, balloons and the like, since it is important for these purposes to have available a strong, flexible as well as impact-resistant and tear-resistant material which has a layer thickness of not substantially more than 100 $\mu$m and has a low weight per unit area, preferably less than 200 g/m$^2$.

It was therefore the object of the invention to provide thin multi-ply films, the thickness of which is not substantially more than 100 $\mu$m and which have a high impact strength and tear strength.

This object is achieved by the multi-ply films according to the invention of high impact strength and tear strength, consisting of at least three layers, the two outer layers consist of films of polyolefin homo- and/or copolymers and the interposed layer consists of fibers or fiber structures of ultrahigh molecular weight polyolefin homo- and/or copolymers, wherein the thickness of the multi-ply film is between 0.1 and 100 microns, the weight average molecular weight of the polyolefins is more than 500.000 g/mol and the films and the fibers are obtained by dissolving the polyolefins in a solvent, forming the solution in films or fibers above the dissolution temperature of the polyolefins, cooling the films or fibers to a temperature below the dissolution temperature for gelling.

The films are especially suitable for the manufacture of parachutes, balloons and sails, as building materials, medical implantation materials, for the production of porous filters and the like.

The multi-ply films according to the invention can also be built up from more than the three said layers, that is to say they can also contain one or more further layers of fibers or fiber structures, each of which adjoin layers of films of polyolefins of ultrahigh molecular weight.

The thin films which adjoin the layers of fibers or fiber structures and, in the case of the simplest embodiment of the multiply films according to the invention, form the outer layers, consist preferably, like the fibers or the fibers forming the fiber structures, of polyolefins of ultrahigh molecular weight, the weight-average molecular weight being preferably more than 500,000 and up to 5,000,000 g/mol or higher in the case of the films and preferably more than 500,000 up to 3,000,000 g/mol or higher in the case of the fibers.

Both the films and the fibers preferably consist of polyethylenes, especially linear polyethylenes, which can contain minor quantities, preferably at most 5 mol%, of one or more other alkenes, copolymerizable therewith, such as propylene, butylene, pentene, hexene, 4-methyl-pentene, octene and the like. In the case of fibers, the polyethylenes contain preferably 1 to 10 and especially 2 to 6 methyl or ethyl groups per 1,000 carbon atoms. Other polyolefins can, however, also be used, for example propylene homopolymers and copolymers, and the polyolefins employed can also contain minor quantities of one or more other polymers, especially 1-alkene polymers.

The thin films employed, consisting of polyolefins of ultrahigh molecular weight, preferably have a thickness of between 0.1 and 15 $\mu$m and especially between 0.1 and 6 $\mu$m and have preferably been stretched, especially biaxially stretched, the product of the stretching in the two main directions (machine direction and the direction transverse thereto) being between 15 and 300.

A particularly preferred process for producing the films employed is described in EP-A-301625. This process comprises dissolving the particular polyolefin employed in a solvent, forming the solution at a temperature above the dissolution temperature of the polyolefin to give a tape, cooling the tape, for gelling, to a temperature below the dissolution temperature and then stretching it. In this case, the gel tape is first subjected to a pre-orientation in one direction, while the solvent is being removed, and then stretched at a higher temperature in a direction substantially perpendicular to the direction of the pre-orientation, whereupon final stretching to obtain the finished thin films is carried out. This gives pore-free, i.e. transparent films of high Young moduli, both in the machine direction and in the direction transverse thereto, of more than 6 GPa and elongations at break of between 10 and 100%.

The interlaminar strength of the films employed can have been increased by the process described in EP-A-301625 in such a way that the films have been subjected to a heat treatment after stretching.

The films employed can also be porous and, in this case, preferably have a density of between 100 and 900 kg/m$^3$ (0.1-0.9 g/cm$^3$). Such porous films can be produced in a known matter, for example by the process known from EP-A-0,163,424, but without applying the compression treatment described therein, for eliminating the pores formed during the evaporation of the solvent from the gel tape. The process described in EP-A-301622 can also be used for the production of porous films.

Moreover the films employed in the multi-ply films according to the invention can have isotropic or anisotropic properties, that is to say due to the different extents of stretching in the machine direction and in the direction transverse thereto, they can have Young moduli which differ in the said two directions.

The fibers employed for producing the multi-ply films according to the invention preferably have a titer of 0.55 to 11 dtex/filament (0.5 to 10 denier/filament), a tensile strength of more than 9 g/dtex (10 g/denier) and a modulus of more than 450 g/dtex (500 g/denier), these preferably being uniaxially stretched fibers such as are produced, for example, according to GB-A-2,042,414 and 2,051,667. The uniaxial stretching is here preferably carried out while maintaining a stretching ratio which is preferably between 15 and 150 and especially is 30 or higher.

The fiber layers employed for producing the multi-ply films according to the invention can consist of mono-filaments or multi-filaments, which may have been twisted. The fiber layer can be used in the form of a non-woven, that is to say with an irregular arrangement of the individual fibers, but woven or knitted fabrics can also be used in which the fibers can be perpendicular to one another in the longitudinal and transverse directions or can be arranged at any desired angles. It is also possible to provide more fibers in one direction than the other; for example, there can be more fibers in the machine direction than in the direction transverse thereto, since the impact strengths and tear strengths can in this way be increased in a controlled manner in one direction as compared with the other direction. Moreover, poorer impact strengths and tear strengths, due to an anisotropy, of the films used can be compensated in this way. It is therefore possible, by the selection of films having corresponding anisotropies or by the quantity of the fibers in the machine direction or in the direction perpendicular thereto, to produce tailor-made multi-ply films, which either have properties balanced in the two directions or have different properties.

The impact strengths and tear strengths of the multi-ply films according to the invention are, in the case of the simplest embodiment consisting of two outer films and an interposed fiber layer, at least twice as high as the corresponding properties of a single film, and they are not reduced even in the case of repeated shock and impact effects.

The production of the multi-ply films according to the invention can be carried out in such a way that, in the case of the simplest embodiment, the two films forming the outer layers are pressed together with an interposed nonwoven, woven fabric or knitted fabric of the polyolefin fibres of ultrahigh molecular weight under the action of a temperature which suffices to melt the components instantly on the surface. Preferably, however, a binder is used which, in particular, consists of a thin film, a powder or granules of a polyolefin, such as a polyolefin of low density, which melts at a lower temperature than the polyolefins from which the films or fibers have been produced. This binder then melts under the action of heat and, after cooling, firmly bonds the layers to one another. If desired, other hot-adhesive or cold-adhesive binders known for bonding polyolefin layers can also be used.

The impact strength of the multi-ply films according to the invention is measured by ASTM method D 1709; in this measurement a steel ball of 2 kg weight and 38 mm (3.8 cm) diameter drops from a height of 1 m onto the sample to be tested and the energy (kJ/m) thus absorbed is measured at 23□C and 50% relative atmospheric humidity.

The tear strength is measured by ASTM method D 1004 (Graves tear strength measurement) at 23□C and 50% relative atmospheric humidity, the distance between the clamps engaging on the sample being 25.4 mm and the speed at which the clamps move apart being adjusted to 51 mm/minute.

## Example 1

According to the procedure described in Examples 1 and 6 of EP-A-0.301.625, for the continuous production of extremely stretched polyethylene films, a non-porous isotropic film of 4 μm thickness was

produced, using a polyethylene of an ultra-high molecular weight (weight-average molecular weight) of about 1.5 x $10^6$ g/mol (Hostalen GUR 412$^R$) and using a decalin solution containing 12.5% of the polyethylene.

According to the procedure described in Examples 1 to 3 of GB-A-2,051,667, monofilaments having a titer of 2.0 dtex/filament (1.8 denier/filament) are produced, using the polyethylene of a weight-average molecular weight of about 1.5 x $10^6$ g/mol (Hostalen GUR 412$^R$) and using a decalin solution having a polyethylene concentration of 12.5% by weight, by maintaining the stretching ratio of 30. Two of the polyethylene films produced were pressed together with an interposed fiber fabric and a film of a polyethylene, having a density of 920 kg/m$^3$ (0.92 g/cm$^3$) and a melting point of about 105¤C, in a heatable press under a pressure of 15 bar at a temperature of 110¤C for 4 minutes, whereupon the multi-ply film obtained was solidified by cooling. The fiber fabric employed consisted of mutually perpendicular multifilaments arranged at a distance of 4 mm in each case and having a titer of 200 dtex (180 denier), a strength of 30 g/dtex (33 g/denier), a modulus of 1215 g/dtex (1.350 g/denier) and an elongation of 3%, determined at an elongation rate of 50% per minute. The multifilaments were produced using a monofilament having a titer of 1.8 denier/filament.

For comparison, a multi-ply film without fibers was produced, which had a weight of 12 g/cm$^2$, whereas the weight of the multi-ply film with fibers was 30 g/cm$^2$.

The results of the impact strength and tear strength measurements were as follows:

1. Measurement of the impact strength

| Measurement of the drop energy (kJ/m) | | | |
|---|---|---|---|
| Sample | Thickness, $\mu$m | with fibers | without fibers |
| 1 | 30 | 400 | 125 |
| 2 | 26 | 375 | 130 |
| 3 | 27 | 380 | 170 |

2. Graves tear strength measurement (maximum stress in MPa)

| Sample | Thickness, $\mu$m | with fibers | without fibers |
|---|---|---|---|
| 1 | 30 | 112 | 23 |
| 2 | 26 | 70 | 20 |
| 3 | 27 | 85 | 20 |

Example 2

Following the procedure described in Example 1, a multi-ply film was produced under a pressure of 5 bar and at a temperature of 110¤C and at a residence time of 7 minutes in the heating press, using porous polyethylene films which had been produced as follows:

Polyethylene of a molecular weight of 1.5 x $10^6$ g/mol (Hostalen GUR 412$^R$) was dissolved in decalin by the procedure described in Example 1 to a concentration of 15% by weight, whereupon 1% of a stabilizer, relative to the polyethylene, was added. The solution was formed in the manner described in Example 1 to give a tape, from which the solvent was removed in an oven at 80¤C over a period of 24 hours without allowing shrinkage. 70 x 70 mm samples were cut out of the opaque porous film obtained and biaxially stretched in a stretching ratio of 10 x 10 at a speed of 40 mm/second at 120¤C up to an end thickness of 3 $\mu$m.

Fibers were produced by the procedure likewise described in Example 1.

A 5 $\mu$m thick film consisting of a linear polyethylene of low density (LLDPE) of 920 kg/m$^3$ (0.92 g/cm$^3$) and of melting point 105¤C and provided with holes of 8 mm diameter located at a spacing of 4 mm on all sides was pressed at 110¤C under a pressure of 56 bar for 7 minutes together with a fiber fabric as described in Example 1 and the porous film produced in the manner described above.

4

The water permeability of the composite material obtained was 1,200 g/m$^2$/day at 20¤C, measured according to DIN 53122.

## Claims

1. Multi-ply film of at high impact strength and tear strength, consisting of at least three layers, the two outer layers consist of films of polyolefin homo- and/or copolymers and the interposed layer consists of fibers or fiber structures of ultrahigh molecular weight polyolefin homo- and/or copolymers, characterised by that, the thickness of the multi-ply film is between 0.1 and 100 $\mu$m, the weight average molecular weight of the polyolefins is more than 500.000 g/mol and the films and the fibers are obtained by dissolving the polyolefins in a solvent, forming the solution in films or fibers above the dissolution temperature of the polyolefins, cooling the films or fibers to a temperature below the dissolution temperature for gelling.

2. A multi-ply film according to claim 1, characterized by that the outer layers have been biaxially stretched, the product of the stretching being between 15 and 300.

3. A multi-ply film as claimed in any of claims 1 to 2, characterized by that the films forming the outer layers are porous.

4. A multi-ply film as claimed in any of claims 1 to 3, characterized by that the layers are mutually joined by hot pressing.

5. A multi-ply film as claimed in claim 4, characterised by that the layers are mutually bonded with the use, as a binder, of a polyolefin of low density or of another polyolefin melting at a low temperature.

6. A multi-ply film as claimed in any of claims 1 to 5, characterised by that the films and/or the fibers consist of polyethylene.

7. A process for producing a multi-ply film as claimed in any of claims 1 to 6, which comprises bonding two films of polyolefins of ultrahigh molecular weight with an interposed layer of fibers or fiber structures of polyolefins of ultrahigh molecular weight under the action of heat and pressure.

8. A process as claimed in claim 7, characterised by that the binder used is a polyolefin of low density or another polyolefin of low melting point.

9. A process as claimed in claim 8, characterised by that, the binder is used in the form of a film.

10. A process as claimed in claim 9, characterised by that, the binder is used in the form of a powder or granules.

11. The use of a multi-ply film as claimed in any of claims 1 to 10 for the manufacture of parachutes, balloons, sails or porous filters or as a building material or medical implantation material.

## Patentansprüche

1. Mehrschichtige Folie mit hoher Schlag- und Reißfestigkeit bestehend aus mindestens drei Schichten, wobei die beiden Außenschichten aus Polyolefinhomo- und/oder -copolymerfolien bestehen und die dazwischenliegende Schicht aus Fasern oder Faserstrukturen aus ultrahochmolekularen Polyolefinhomo- und/oder -copolymeren besteht, dadurch gekennzeichnet, daß die Dicke der mehrschichtigen Folie 0,1 bis 100 $\mu$m beträgt, das gewichtsmittlere Molgewicht der Polyolefine höher als 500 000 g/Mol ist und die Folien und die Fasern durch Lösen der Polyolefine in einem Lösungsmittel, Formen der Lösung zu Folien oder Fasern oberhalb der Lösungstemperatur der Polyolefine und Kühlen der Folien oder Fasern zum Gelieren auf eine Temperatur unterhalb der Lösungstemperatur erhalten werden.

2. Mehrschichtige Folie nach Anspruch 1, dadurch gekennzeichnet, daß die Außenschichten biaxial gestreckt wurden, wobei das Produkt des Streckens zwischen 15 und 300 ist.

3. Mehrschichtige Folie nach einem der Ansprüche 1 bis 2, dadurch gekennzeichnet, daß die die Außenschichten bildenden Folien porös sind.

4. Mehrschichtige Folie nach einem der Ansprüche 1 bis 3, dadurch gekennzeichnet, daß die Schichten durch Heißpressen miteinander verbunden sind.

5. Mehrschichtige Folie nach Anspruch 4, dadurch gekennzeichnet, daß die Schichten unter Verwendung eines Polyolefins mit niedriger Dichte oder eines anderen Polyolefins, das bei einer niedrigen Temperatur schmilzt, als Bindemittel miteinander verbunden sind.

6. Mehrschichtige Folie nach einem der Ansprüche 1 bis 5, dadurch gekennzeichnet, daß die Folien und/oder Fasern aus Polyäthylen bestehen.

7. Verfahren zum Herstellen einer mehrschichtigen Folie, wie in einem der Ansprüche 1 bis 6 beansprucht, das das Verbinden von zwei Folien aus Polyolefinen mit ultrahohem Molgewicht mit einer dazwischenliegenden Schicht von Fasern oder Faserstrukturen aus Polyolefinen mit ultrahohem Molgewicht unter der Einwirkung von Wärme und Druck umfaßt.

8. Verfahren nach Anspruch 7, dadurch gekennzeichnet, daß das verwendete Bindemittel ein Polyolefin von niedriger Dichte oder ein anderes Polyolefin mit niedrigem Schmelzpunkt ist.

9. Verfahren nach Anspruch 8, dadurch gekennzeichnet, daß das Bindemittel in Form einer Folie verwendet wird.

10. Verfahren nach Anspruch 9, dadurch gekennzeichnet, daß das Bindemittel in Form eines Pulvers oder von Granülen verwendet wird.

11. Verwendung einer mehrschichtigen Folie, wie in einem der Ansprüche 1 bis 10 beansprucht, zur Herstellung von Fallschirmen, Ballonen, Segeln oder porösen Filtern oder als Baumaterial oder medizinisches Implantationsmaterial.

**Revendications**

1. Pellicule multicouches possédant une résistance au choc et une résistance au déchirement élevées consistant en au moins 3 couches dont les deux extérieures sont des pellicules d'homo et/ou de copolymères de polyoléfine et la couche interposée étant formée de fibres ou structures fibreuses en homo et/ou copolymères de polyoléfines d'ultra-haute masse moléculaire, caractérisée en ce que l'épaisseur de la pellicule multicouches est comprise entre 0,1 et 100 $\mu$m, la masse moléculaire moyenne en poids des polyoléfines est supérieure à 500.000 g/mole et on obtient les pellicules et les fibres en dissolvant les polyoléfines dans un solvant, en formant avec la solution des pellicules ou fibres au dessus de la température de dissolution des polyoléfines, en refroidissant les pellicules ou fibres à une température au dessous de l a température de dissolution pour en permettre la gélification.

2. Pellicule multicouches selon la revendication 1, caractérisée en ce que les couches extérieures ont subi un étirage biaxial dont le produit de l'étirage est compris entre 15 et 300.

3. Pellicule multicouches selon la revendication 1 ou 2, caractérisée en ce que les pellicules formant les couches extérieures sont poreuses.

4. Pellicule multicouches sel on l'une quelconque des revendications 1 à 3, caractérisée en ce que les couches sont mutuellement réunies par pressage à chaud.

5. Pellicule multicouches selon la revendication 4, caractérisée en ce que les couches sont mutuellement liées à l'aide d'un liant qui est une polyoléfine de basse densité ou une polyoléfine fondant à basse température.

6. Pellicule multicouches selon l'une quelconque des revendications 1 à 5, caractérisée en ce que les pellicules et/ou les fibres sont en polyéthylène.

**7.** Procédé de production d'une pellicule multicouches selon l'une quelconque des revendications 1 à 6, qui consiste à unir deux pellicules de polyoléfines d'ultra-haute masse moléculaire avec une couche interposée de fibres ou de structures fibreuses en polyoléfines d' ultra-haute masse moléculaire par l'action de la chaleur et de la pression.

**8.** Procédé selon la revendication 7, caractérisé en ce que le liant utilisé est une polyoléfine basse densité ou une autre polyoléfine de bas point de fusion.

**9.** Procédé selon la revendication 8, caractérisé en ce que le liant utilisé est sous forme d'une pellicule.

**10.** Procédé selon la revendication 9, caractérisé en ce que le liant est sous forme d' une poudre ou de granules.

**11.** Utilisation d'une pellicule multicouches selon l'une quelconque des revendications 1 à 10, pour la fabrication de parachutes, de ballons, de voiles ou de filtres poreux ou comme matériaux de construction ou matériaux d'implantation médicale.